# EUROPEAN PATENT APPLICATION

(11) **EP 2 189 796 A1**
(43) Date of publication of application: **26.05.2010**
(21) Application number: 08169451.5
(22) Date of filing: 19.11.2008
(51) Int. Cl.: G01P 13/00, F16N 29/02

(54) **Signalling device for monitoring lubrification, proportioner comprising such a signalling device and signalling method**

(71) Applicant: Groeneveld Transport Efficiency B.V., 4207 HB Gorinchem (NL)
(72) Inventor: van der Hulst, Willem, 23893 Cassago Brianza (LC) (IT)
(74) Representative: Swinkels, Bart Willem

(57) **Abstract**

The invention relates to a signalling device for monitoring lubrification (15) comprising a housing (4) having a flow channel (13) for a lubricant, wherein at least one moveable body (3) is mounted in the flow channel (13), the body (3) moving as a result of a flow rate change. The signalling device comprises a sensor (10) for signalling a flow of lubricant in the channel by monitoring body movement (3). The signalling device (15) having a device for providing a field (5) at the position of the body, the field biasing the body (3) in a upstream direction. As a result of a flow change, the body (3) will move and such movement is signalled.

## Description

The present invention relates to a signalling device for monitoring lubrification. The invention further relates to a proportioner comprising such a signalling device. The invention also relates to a method for monitoring lubrification.

A signalling device for monitoring lubrification is known from EP 0498027 disclosing a piston type flow switch, the complete disclosure of said publication being incorporated by reference. A magnetic piston can reciprocally move inside a bushing and is biased by a spring in a closed position wherein lubricant flows are blocked. As a result of a lubricant pressure at an inlet, the piston will move against the bias of the spring and open. The movement of the magnetic piston is signalled in a sensor mounted in the housing positioned outside the lubrification channel.

The prior art construction is large in volume and includes many components downstream from the magnetic body including a spring for biasing the body. The spring is positioned inside the flow channel and forms a flow resistance. The magnetic body also forms a flow resistance, which functions according to Hook's law. Signalling devices for monitoring lubricant flows are positioned in a challenging environment, and are exposed to all kinds of dirt.

It is a goal of the invention to provide a more simple construction for a signalling device. It is another goal to provide a flow channel having a lower flow resistance.

At least one of the objects of the invention is achieved by providing a signalling device for monitoring the lubrification flow comprising a housing having a flow channel for a lubricant, wherein at least one body is positioned in the flow channel. The body is preferably mounted movably in the flow channel and it is advantageous that movement of the body is triggered by a lubricant flow. Specifically as a result of a flow change, the body will move. Preferably the position of the body is a indication for the amount of flow in the channel.

The signalling device further comprises at least a sensor for signalling the lubricant flow. The sensor is for example capable of following the position of the body, which position is an indication for the flow. By monitoring the movement of the body under the influence of the flow, the sensor will be able to give an indication signal for the flow.

According to an advantageous embodiment the signalling device comprises a device for providing a field at the position of said body, the field biasing the body in an upstream direction. The field is a field that can exerted a force on the body. By providing such a field a signalling device is provided without many of the construction elements according to the prior art. The signalling device has a more simple construction. Costs for construction are lower. Further the spring bias is replaced by a field at the position of the body that provides the necessary bias in the upstream direction. The field bias exerted on the body can vary as a result of the position of the body. The force exerted on the body can specifically differ from Hook's Law.

Preferably the device for providing the field is positioned outside the lubrification channel. The device for providing the field does not provide an additional resistance in the flow channel. Further it is preferred to position the device outside the channel as a it can be safeguarded from damage.

Preferably the device provides a magnetic field. Magnetic interaction is well known. Magnetic fields can penetrate through many materials including e.g. plastic housings. The skilled man will be able to provide a device for providing the magnetic field such as a permanent magnet or a electromagnetic coil or another suitable device for providing a suitable field. Further the skilled man will be able to provide a body from well known materials that interacts with such a magnetic field.

A suitable material for the body is steel. In an embodiment a stainless steel body is used having a core of magnetisable material. Such material is suitable for contact with a lubricant. The body can have a suitable shape. A ball is preferred. A ball can act as a flow resistance and therefore react to a flow change, but the ball has a limited flow resistance.

In a preferred embodiment the housing and in particular the channel comprises a seat for a valve, said body being biased against said seat for forming a valve. In a situation lacking a lubricant flow, the field bias positions the body against the seat closing the lubricant channel. As a result of a flow, the valve will open and the body will move away from the seat to a downstream position. The body and the valve can function as a non return valve preventing damage to upstream parts of the lubricant flow channel. Further the seat functions as a cam stopping a further upstream movement of the body under the influence of the field bias.

In an embodiment a coil is provided for controlling the magnetic field. By controlling the magnetic field, the bias in the upstream direction can be controlled. In a further embodiment such a coil can allow to control the position of the body. This will allow control of the valve formed by seat and body. A controllable valve can be used to control the flow of lubricant in the flow channel. The coil can be connected to a battery and a controller.

In a further embodiment the flow channel comprises a guiding device for guiding the movement of the body. The guiding device means can be a rod or pin positioned in the flow channel preferably extending in a direction of the flow channel. The pin can guide the movement of the body (path) in the equilibrium of force acting thereon: the field bias and the lubricant flow. It does not have to be path aligned with the flow direction/channel. The rod can guide the body onto the seats if moved in an upstream direction.

The body can have a boring for receiving the guiding device, and in particular the pin. The guiding device can limit the possible movement of the body. The guiding device limits the degrees of freedom of the body, preferably in a generally upstream and downstream direction of the flow channel. The guiding device can also provide an end position in a downstream direction preventing the body from moving further downstream. The guiding device can also provide an end position in an upstream direction.

In an embodiment the sensor for signalling a lubricant flow is a magnetic sensor for signalling a change in the magnetic field. A result of a flow change the body will move. The body moves in the field, in particular in the magnetic field. A magnetic body that moves against a biasing force of the magnetic field will disturb said field. In a magnetic field the field will change as a result of induction. Said disturbance can be signalled with the sensor, which therefore allows detection of a change in the flow. In a preferred embodiment the sensor is a Hall sensor. Such a sensor is very sensitive in measuring magnetic field changes, but has a robust construction.

In an embodiment the sensor is part of an electronic circuit. In an embodiment the sensor and/or the electric circuit are received in a cavity formed in the housing separate from the channel. This will prevent dirt or lubricant from reaching the sensitive electronics. The cavity is closed. Dirt can not reach the cavity.

The electronic circuit can comprise a comparator and a memory. The received sensor signal from the sensor can be compared with a sample signal and only if the sensor signal shows sufficient similarities with the sample signal will the electronics provide a signal indicating the lubricant flow was good.

According to a further aspect a lubricant proportioner is provided. A preferred embodiment according to the invention comprises an oil storage system like the prior art proportioner according to EP 0608951 included in its entirety by reference. The comprising can receive a signal from the signalling device. The electronic circuit is e.g. arranged to send a signal wirelessly to the proportioner. The signal is an example of a feedback signal that can be used to check whether the desired portion of lubricant did reach the signalling device that is positioned close to the equipment that needs lubrification.

According to yet another aspect a method for monitoring lubrification is provided. The method comprises in an embodiment providing a flow of lubricant in a flow channel, providing a field and biasing a body mounted in the flow channel in a upstream direction with the field, and monitoring the position of the body. The body is mounted moveably in the channel and moves under the influence of changes in the flowing rate in the channel. Its position is an indication for the flow of lubricant in the flow channel.

Preferably monitoring the position of the body comprises signalling a change in the field. The field is preferably a magnetic field. If the body moves, this causes magnetic induction. The magnetic induction is measurable. The magnetic induction is an indication for the flow of lubricant in the flow channel.

Although the invention is described using preferred embodiment, the invention is not limited to any of the specific embodiments. Although the invention comprises any of the embodiments that allow obtaining any of the goals of the invention. The skilled person will be able to use any of the explicit indicated advantages of any of the features mentioned in this description in different embodiments and can therefore foresee that such use can be infringing possible patent rights of the applicant. The invention can be any of explicit and/or implicit advantages mentioned herein. The scope of protection of this application and/or any divisional applications can comprise any of the explicit and/or implicit features mentioned herein.

The invention will now be described in further detail with reference to the attached drawing, wherein:
- Figure 1: shows a cross-sectional view of a first embodiment of a signalling device,
- Figure 2: shows an exploded view of a first embodiment,
- Figure 3: shows a detail according to III shown in Figure 1, and
- Figure 4: shows in detail a perspective view of IV in Figure 3.

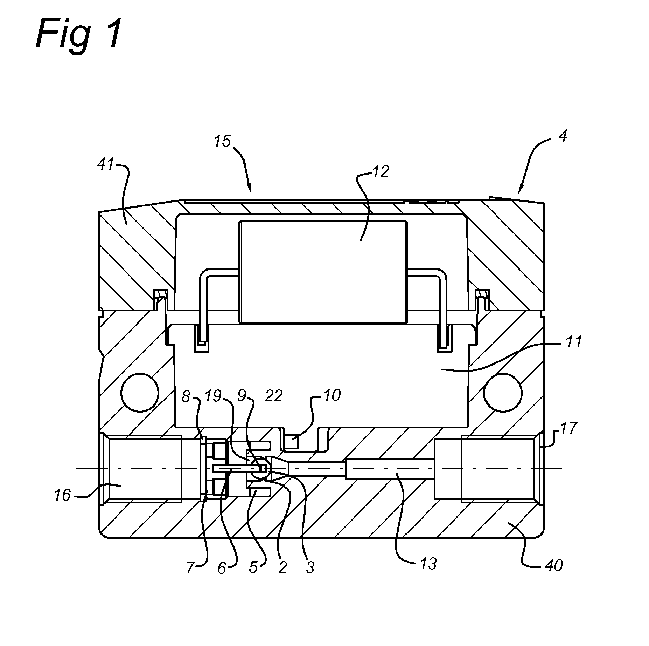

As illustrated in Figure 1 a housing 4 is provided having a flow channel 13. The flow channel is arranged and constructed for a flow of lubricant. The housing 4 has an inlet 1 and an outlet 16. The channel 13 defines a passage way through housing 4.

In one application of the invention said housing 4 is made from plastic material like PVC, PE, XS or similar materials. The housing 4 can comprise any kind of attachment devices for attaching the housing to e.g. a bearing to be lubricated.

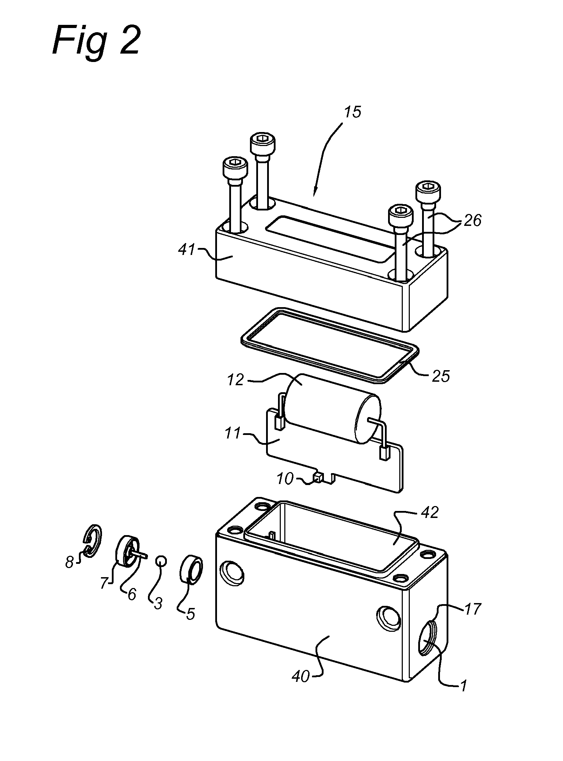

The illustrated embodiment according to Figure 2 shows the signalling device 15 in exploded view comprising two housing parts 40, 41. Housing parts 40, 41 can be connected to eachother by means of connection device 26 and can comprise a seal 25. The formed housing 4 comprises an internal volume or closed cavity 42 wherein sensitive instruments can be received which will allow a dirt free storage of these elements. The cavity 42 also provides protection from other kinds of damages.

Since signalling device 15 can be positioned near a bearing, dirt could come in contact with sensitive instruments of the signalling device 15 if these instruments would be positioned in the flow channel 13. The internal volume 42 is separated from the internal passageway 13, and in this manner the sensitive circuit tree and in particular sensor 10 is positioned outside the channel 13, and is protected from dirt or other external influences.

The housing 4 can comprise further housing parts. In an embodiment the housing parts 40 and 41 form the internal passageway 13.

Housing part 40 comprises in the embodiment shown the internal fluid passage way 13 for fluids such as fat, oil, etc. In the internal volume 42 a battery 12 can be received, such battery for example connected to an electronic circuit 11 and a sensor 10.

Housing part 40 comprises near the inlet 1 a threaded bushing 17 for connection with external elements. Such a threaded connection 17 is also present in an embodiment near outlet 16. The signalling device 15 can be in a preferred embodiment a device that is positioned near a bearing and that is connected to a lubricant feeder such as a proportioner. Outlet 16 can be connected to a lubricant inlet of a device that needs lubrification.

Inlet 1 can be connected using that threaded connection 17 in a similar fashion as in prior art to a proportioner 18 schematically illustrated in Figure 2. In an embodiment a prior art proportioner according to EP-A-0 608 951 is connected to the signalling device 15. The complete disclosure of EP 0608951 is included by reference in this application. The proportioner 18 or a similar fluid storage system can comprise a fluid pressure device 19, also schematically illustrated, to create a lubricant flow in a lubrification channel 13.

In a preferred embodiment the proportioner is arranged to provide at regular intervals, such as every 30 minutes, a portion of lubricant for lubricating a bearing. The portion will pass through the channel 13 of the signalling device 15. The signalling device 15 is arranged to measure properties of said portion and is in particular arranged to provide a feedback signal to the proportioner 18 to indicate that proper lubrication occurred.

Outlet 16 can be connected in a similar fashion as in prior art arrangement to a part to be lubricated. Housing 4 can comprise a suitable connection device for connecting it to a part to be lubricated.

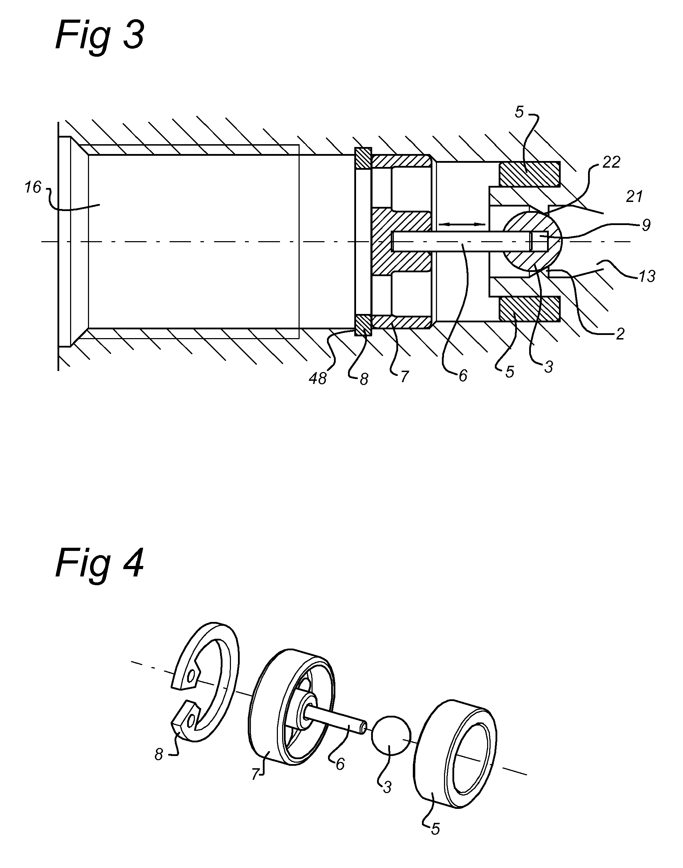

The fluid channel 13 extends from the inlet 1 to the outlet 16 through housing 4. In the channel 13 a body 3 is mounted. In the illustrated embodiment it is positioned in a default position and is biased onto a seat 2 formed in a side wall of the flow channel 13. The body 3 is ball shaped, but can have any suitable form. The ball is movable in a direction according to arrow 45 along an alignment pin 6 received in a boring 9 of body 3. The construction is shown in more detail in Figure 4.

Figure 4 shows the ball 3 which is movable over pin 6 extending in a direction generally parallel to the flow channel 13, the pin 6 extending from a retainer device 7 that is positioned in the flow channel. The retainer device 7 can be locked in position in the housing 41 using a clip 8. Clip 8 is retained in a cavity formed in the side wall of the channel 13. Other embodiments for positioning the retainer and pin in the flow channel are also possible within the invention.

In an embodiment body 3 is ball formed from a magnetic material such as steel. In embodiment the body contains a ferromagnetic core. The skilled person will be able to provide a body that can experience magnetic fields.

In a magnetic field ball 3 will experience a force exerted on the ball by the magnetic field. In another embodiment other types of fields can be used for exerting a force on the body.

Signalling device 15 comprises a device 5 for providing a field and in particular a magnetic field that can exert a force on body 3. Body 3 is allowed to move in the flow channel.

The device 5 is arranged to exert a force on the body 3 that biases the ball in an upstream direction. In the embodiment according to Figure 1 the biasing force brings the ball into contact with the seat 2 and will as such create a valve 21 comprising the ball 3 and seat 2. In a default position the valve 21 is closed. A default position is the position wherein there is no lubricant flow.

A field and in particular a magnetic field created by a coil or permanent magnet 5 biases the body 3 onto the seat in a closed position. A fluid flow in the lubricant channel, as a result of a pressure device 19 of a proportioner 18, will cause the ball 3 to move downstream defying the magnetic field. The body 3 will move over the alignment pin 6 away from seat 2. This results in opening of the valve 21. A flow of lubricant through channel 13 is allowed and will reach outlet 16.

In an embodiment the device for providing the magnetic field 5 can comprise coils connected to a power source and a controller. The controller, preferably part of electronic circuit 11, can be used to set a suitable magnetic field at the position of the body 3 and thereby controlling the bias, and in a further preferred embodiment even controlling the position of the body 3. In an embodiment the device for providing the magnetic field in the form of a coil can control opening and closing the valve 21.

In the illustrated embodiment device 5 is a permanent magnet with a permanent magnetic field which biases body 3 in the upstream direction. The device 5 can be positioned in or outside the fluid flow channel 13. In Figure 3 permanent magnet 5 is positioned in the passageway 13. A suitable tool is used for fixing the position of the permanent magnet 5. In an embodiment a clip is used for positioning the permanent magnet 5 and in another embodiment permanent magnet 5 is positioned using the clip 8.

It is also possible to position the magnetic device 5 outside the flow channel which will prevent it from becoming damaged or wear. In this manner the device 5 is protected from the penetration of or damage from dirt. Also this prevents contamination of the device with magnetic particles in the flow. The magnetic field can penetrate the housing 4 and exert a force on the body 3.

Use of a field and in particular a magnetic field differs from prior art in that a non linear field can be used. Instead of using a spring for biasing a body in an upstream direction resulting in a situation wherein the body is moved downstream against a force obeying Hook's law, now a field can be used that for example reduces in force when the body is moved further away from its upstream/default position. The body can be moved more easily and is therefore more sensitive to flow changes. This improved property can be used in a signalling device for monitoring the lubricant flow, in which flow is signalled using the position of the body 3. As the body moves more sensitively in reaction to a flow of lubricant, following the position of the body will give a better indication of the lubricant flow.

In the illustrated embodiment body 3 is biased against the seat 2. However according to the invention biasing the body onto an external part such as a seat and thereby forming a valve is not necessary for the invention. In an embodiment the body 3 is biased towards an upstream position, e.g. against an end portion of alignment pen 6 and can due to a lubricant flow, move in a downstream direction against the bias. According to the invention the body is movable as a result of flow changes, and the movement of the ball is an indication for the flow rate of lubricant in the flow channel.

Body 3 positioned in the magnetic field created by magnetic device 5 in the fluid channel 13 can form a part of a fluid flow indicator. In the illustrated embodiment a sensor 10 is positioned in the vicinity of (or close by) the body 3 and device 5, said sensor 10 being arranged to measure a position change of body 3.

In a preferred embodiment said sensor 10 is a magnetic sensor in particular a Hall sensor, that can measure a change in the magnetic field. If body 3 moves as a result of a flow change, this will influence the magnetic field at the position of the body 3, said change being signallable by sensor 10. Sensor 10 can measure changes in the magnetic field and can convert said measure changes in a signal, in particular a signal that can be used as a feed back to a proportioner 18 coupled to an inlet of the signalling device 15.

Sensor 10 is connected to a part of an electronic circuitry 11 connected to a battery 12 that can be arranged to interpret the measured position of the body. In an embodiment the measured signal or a converted parameter based on said measured signal is sent preferable wirelessly to another device, and in particular to a receiver that is part of the proportioner 18.

The arrangement of the electronic circuit 11 is readily available for the skilled person and necessary and well known semiconductor elements can be used to build up a suitable circuit.

In use a body 3 will move as a result of a flow in particular a flow pressure in the fluid flow channel 13 that contains lubricant. A change in the position of the body 3 movable in the flow channel 13 will cause a change in the magnetic field at the position of the body 3 provided by a field device 5. This change is registered by an electronic sensor 10 such as a Hall sensor and in a suitable electronic circuit 11 the signal is converted in a preferably wireless signal that can be sent by suitable transmitter comprising an antenna to a receiver in a proportioner 18. The sensor signal or a signal representing the measured signal can be compared to a threshold signal or a sample that is available from a memory. If the measured signal and the sample signal are sufficiently similar, the signalling device can for example send a signal indicating that lubrication is good, while if the similarities are not sufficient, a signal indicating that lubrication has failed can be sent.

In a method according to an embodiment of the invention a lubricant is supplied to an inlet 1 and as a result of the flow, the body 3 will move. In particular the steel ball 3 will be pushed downstream, away from a seat 2. In the plastic housing 4 a magnet 5 biases the bullet onto the seat 2. The lubricant flow will open the valve 21 formed by ball 3 and seat 2, whereupon body 3 will move over messing pin 6 guided by a boring 9 in body 3. If the body 3 moves downstream, it will move against the biasing force provided from a magnet 5. The body 3 can move reciprocally over the pin 6. The movement of the body 3 in a magnetic field will change the magnetic field. The change is registered by a sensor 10 such as a Hall sensor, that can be a part of an electronic circuit 11 fed by a battery 12. The electronic circuit can send a signal wirelessly to a pump or proportioner to signal that lubricant reached the outlet 16.

Although the present invention was described with references to his specific embodiments, those skilled in the art will recognise that changes can be made thereto without departing from the scope and spirit of the invention as set forth in the dependent claims. Features disclosed in the foregoing description in the claims and/or in the companying drawings may both separately and in combination thereof be material for realising the invention in divers forms thereof.

## Claims

1. Signalling device for monitoring lubrification (15) comprising a housing (4) having a flow channel (13) for a lubricant, wherein at least one moveable body (3) is mounted in the flow channel (13), the body (3) moving as a result of a flow rate change, further comprising a sensor (10) for signalling a flow of lubricant in the channel by monitoring body movement (3), the signalling device (15) having a device for providing a field (5) at the position of the body, the field biasing the body (3) in a upstream direction.

2. Signalling device according to claim 1, wherein the field is a magnetic field.

3. Signalling device according to claim 1 or 2, wherein the body (3) is a magnetic body and the sensor (10) is a sensor for measuring magnetic field changes.

4. Signalling device according to claim 3, wherein the sensor (10) is a hall sensor.

5. Signalling device according to any of the claim 1-5, wherein the flow channel (13) comprises a valve seat (2) and wherein the body (3) is biased towards the seat by said field.

6. Signalling device according any of the preceding claims, wherein the sensor (10) is connected to an electronic circuit (11) for interpreting a signal received from the sensor (10).

7. Signalling device according to any of the preceding claims, wherein the signalling device comprises a guiding device (6) for guiding the movement of the body.

8. Signalling device according to claim 7, wherein the guiding device is a pin, preferably a brass pin (6).

9. Signalling device according to claim 8, wherein the body (3) has a boring (9), and wherein the pin (6) is received in the boring (9).

10. Signalling device according to any of the preceding claims, wherein the housing (4) comprises a closed cavity (42) for receiving the sensor and preferably an electronic circuit (11) connected to the sensor (10).

11. A system for providing lubrification comprising a lubricant proportioner (18) coupled to a signalling device for monitoring lubrification (15) according to any one of the preceding claims.

12. System according to claim 11, wherein the signalling device (15) comprises a transmitter and the proportioner (18) comprises a receiver for sending and receiving a lubrification feedback signal.

13. A method for monitoring lubrification comprising:
- providing a flow of lubricant in a flow channel (13)
- providing a field and biasing a body (3) mounted in the flow channel (13) in a upstream direction with the field, and
- monitoring the position of the body (3).

14. Method according to claim 13, wherein monitoring the position of the body (3) comprises signalling a change in the field.
